# EUROPEAN PATENT APPLICATION

(11) **EP 2 940 246 A1**
(43) Date of publication of application: **04.11.2015**
(21) Application number: 14166916.8
(22) Date of filing: 02.05.2014
(51) Int. Cl.: E21B 47/06, G10K 11/00

(54) **Pressure-compensated transducer assembly**

(71) Applicant: Piezotech, LLC, Indianapolis, IN 46268 (US)
(72) Inventor: Dallas, James Michael, Superior, CO Colorado 80027 (US); Lautzenhiser, Frans, Zionsville, IN Indiana 46077 (US)
(74) Representative: Tomkinson, Alexandra

(57) **Abstract**

A pressure-compensated transducer assembly has an inner housing (4) with a closed transducer end and an outer housing (6) with an open transducer end. A piezoelectric assembly (1, 2, 3) is in the closed transducer end of the inner housing. A liquid-filled inter-housing space (19) is between the outer housing and the inner housing, and has a transducer end open to the environment and a connection end open to the piezo assembly space (4c). A blocking member (10) separates the transducer end of the inter-housing space from the connection end, and prevents fluids from flowing between the two ends. The blocking member is movable within the inter-housing space in response to pressure differences the environment and the interior space.

## Description

### BACKGROUND OF THE INVENTION

It is known to use piezoelectric transducers in downhole drilling environments that present high-pressure and high-temperature challenges to the transducer. Such environments may have pressures of 25K psi or more, and may have temperatures in excess of 600° F.

When the pressure presented by the environment exceeds the pressure inside the transducer, the performance of the transducer may be compromised. Various mechanisms for adjusting the internal pressure in response to outside pressure changes have been devised, but none have proven completely satisfactory.

A need therefore exists for a pressure compensated assembly for housing a piezoelectric transducer or other functional element. The present invention addresses that need.

### SUMMARY OF THE INVENTION

According to one embodiment of the present invention there is provided a pressure-compensated transducer assembly.

The assembly preferably comprises an inner housing with a closed end and a sidewall, and defining a first interior space. The closed end is the end that is distal to (remote from) the point of attachment to the operating electronics.

The assembly also includes an outer housing with an open transducer end and a sidewall, and defining a second interior space.

A functional element, which may be a piezoelectric transducer, is provided in the first interior space. When the functional element is a piezoelectric transducer, the piezoelectric material is preferably provided as a disc (or disc stack) with a face contacting the closed end of the inner sidewall. The piezo element or stack is positioned in the inner housing such that vibration of the piezo element will cause the housing floor to vibrate, thus propagating acoustic waves from the device. A transducer face plate is preferably provided on the outside surface of the housing floor, in which case the acoustic waves will be emitted from the transducer face plate.

At least a portion of the outer housing is spaced apart from the inner housing, and a channel is provided in the space between the outer housing and the inner housing, with the channel having a first end open to the environment and a second end open to the first interior space. The end of the channel that is open to the environment is preferably open to the environment immediately adjacent the transducer, and more particularly immediately adjacent the transducer face plate.

A blocking member is provided in the channel, and is movable within that channel. The movable blocking member defines a connection end channel portion and a transducer end channel portion.

A relatively non-compressible fluid is provided in the first interior space, and extends into the connection end channel portion to the blocking member. The relatively non-compressible fluid is preferably a liquid, and is more preferably an oil.

The movable blocking member is effective for preventing fluid from flowing from the connection end channel portion to the transducer channel portion. the movable blocking member is also effective for equalizing the pressure inside the device with the pressure outside the transducer. As the pressure outside the transducer increases, the movable member moves in the channel - thereby reducing the size (volume) of the portion of the channel connected to the inside of the device. Since the liquid in the interior and in the channel is relatively non-compressible, this increases the pressure inside the device until the pressures are equal and the movable member ceases to move.

The fluid-filled channel is preferably ineffective for acoustically decoupling the inner face of the transducer from the inside of the inner housing.

### DESCRIPTION OF THE DRAWINGS

FIG. 1 shows a side elevational view, in full section, of one embodiment of the pressure-compensated transducer assembly of the present invention.
FIG. 2 shows a side elevational view, in full section, of another embodiment of the pressure-compensated transducer assembly of the present invention.

### DESCRIPTION OF PREFERRED EMBODIMENTS

For the purposes of promoting an understanding of the principles of the invention, reference will now be made to certain preferred embodiments and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

As indicated above, one embodiment of the present invention provides a pressure-compensated transducer assembly that may be used as a sensor in an environment such as a downhole oilfield well. Such transducers may use piezoelectric materials to send and receive acoustic waves. The assembly is typically connected to electronic controls at one end and propagates acoustic waves from the other end. Accordingly, for the purposes of this disclosure the assembly will be described as having a transducer end and a connection end, with the transducer end being the end of the assembly from which acoustic waves are propagated to the environment, and the connection end being the end that is connected to the control electronics.

In a preferred embodiment the assembly comprises an inner housing and an outer housing, and an inter-housing space between all or parts of those two housings. The inner housing preferably comprises a closed end and a sidewall, and defines a first interior space. The outer housing preferably comprises an open end and a sidewall, and defines a second interior space. The two housing are preferably positioned so that the inner housing is substantially within the outer housing with the closed end of the inner housing being positioned adjacent the open end of the outer housing. In the most preferred embodiments the housings are generally cylindrical in shape, with the inner housing having closed end that forms a right circular cylinder (with one optionally open end) with respect to the inner housing side wall. The outer housing overlays the inner housing with the closed end of the inner housing positioned at or near the open end of the outer housing.

A functional element, which may be a piezoelectric transducer, is provided in the first interior space at the closed (transducer) end of the housing. In a preferred embodiment the transducer comprises a piezoelectric disc (or a stack or two or more piezoelectric discs) positioned with the bottom face of the disc (or the disc stack) on the inside floor of the closed housing end. The disc or disc stack may contact the housing floor so that vibration of the disc/stack causes a corresponding vibration of the housing floor. The piezo element is preferably effective to vibrate with a frequency and power effective to emit acoustic waves suitable for remote sensing in downhole drilling environments.

A backing material may be located on the top side of the disc or the disc stack. For example, a high acoustic impedance material such as tungsten may be used. In other embodiments the backing material may be a mixture of high acoustic impedance materials such as epoxy/polymer with or without powdered tungsten. A tensioning rod or other assembly may be provided to keep the piezo element(s) and the backing material in appropriate compression.

The transducer assembly may include a face plate adjacent to and contacting the transducer end of said inner housing. In one preferred embodiment the face plate is a thin material that resists abrasion and has an acoustic impedance which is less than the acoustic impedance of the housing floor. Preferred face plate materials include polymers such as polyether ether ketone (PEEK). The face plate may be bonded to the outside of the inner transducer housing.

The disc or disc stack is powered and controlled by electronics attached to the connection face of the disc or the disc stack, as is known to the art.

As indicated above, the inner and outer housing are preferably cylindrical in shape, and the outer housing is spaced apart from the inner housing. An inter-housing space is provided between the outer housing and the inner housing, with the space optionally surrounding all or substantially all of the inner housing. Alternatively the inner-housing space may be one or more channels provided between the inner and outer housings.

The inter-housing space has a transducer end portion open to the environment, and a connection end portion that opens or connects to the first interior space. A blocking member is provided in the space, and is movable within the space. The movable blocking member defines a transducer end portion and a connection end portion of the inter-housing space, and is effective for preventing fluid from flowing from the connection end to the transducer end, and *vice versa.*

A liquid is provided in the first interior space, and extends into the connection end portion of the inter-housing space. The liquid is preferably an oil, such as a high-temperature silicone oil. The volume of liquid provided in the device is fixed, and is sufficient to maintain a pressure sufficient to position the movable member near the transducer end of the inter-housing space (but well within the space) at environmental pressures of about 15 psi.

As the environmental pressure outside the assembly increases (such as when the assembly is lowered into an oil well), the movable blocking member moves within the inter-housing space such that the transducer end portion of the space increases in size/volume and the connection end portion of the space decreases in size/volume. Since the space comprising the connection end portion of the inter-housing space and the inner housing space is filled with a fixed amount of liquid, the pressure that the liquid exerts on the inside of the device increases as the outer pressure increases. This provides pressure compensation with respect to changes in pressure when the device is provided in downhole well drilling mud or another hostile environment. Most preferably the pressure compensation is effective to accommodate environmental pressures of 20,000 psi or more.

It is to be appreciated that the relatively non-compressible fluid-filled channel may be ineffective for acoustically decoupling the inner face of the functional element from the inside of the inner housing. This is in contrast to devices in which a similar structure includes a channel that is filled with a gas - thus acoustically decoupling the inner face of the functional element from the inside of the inner housing.

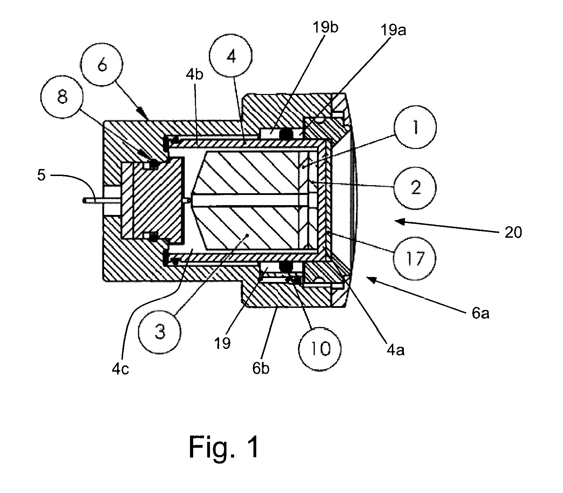

Referring now to the drawings, FIG. 1 shows one embodiment of the pressure-compensated transducer assembly of the present invention comprises an inner housing 4 with a closed transducer end 4a and a sidewall 4b, and defining a first interior space 4c. The assembly also comprises an outer housing 6 with an open transducer end 6a and a sidewall 6b, and defining a second interior space. A functional element is provided in the first interior space. The illustrated functional element comprises first ceramic layer 1, second ceramic layer 2, and backing 3. The ceramic layer(s) and the backing layer(s) are preferably held together and to the inner housing by mechanical compression forces. PEEK face plate 17 is preferably bonded to the outside of the inner housing, and cooperates with inner housing end 4a, first ceramic layer 1, second ceramic layer 2, and backing 3 to provide an acoustic sounder.

Inner housing 4 and outer housing 6 are provided such that the outer housing is spaced apart from the inner housing. A channel 19 is provided in the space between the outer housing and the inner housing, with the channel having a transducer end 19a open to the environment 20 and having a connection end 19b open to first interior space 4c.

A blocking member 10, such as an O-ring, is provided in and movable within channel 19. The position of the blocking member defines a connection end channel portion 19b and a transducer end channel portion 19a. The blocking member is effective for preventing fluid from flowing from the connection end channel portion to the transducer channel portion.

A relatively non-compressible fluid is provided in the first interior space, and extends into the connection end channel portion to the blocking member. The fluid is preferably a natural or synthetic oil that is capable of functioning in high-pressure and high-temperature environments. High-temperature silicone oils are preferred for some applications.

A second O-ring 8 may be provided around a connection end assembly to seal inner space 4c from the control electronics. The inner housing space that is filled with oil must be a closed space for the pressure compensation mechanism to function properly, so oil must be prevented from leaking from inner space 4c to the control electronics.

Control electronics 5 enter the device through the connection end assembly. The control electronics power and control the piezo element, sending acoustic waves when the device is operating is "send" mode and receiving acoustic waves when the device is in "receive" mode.

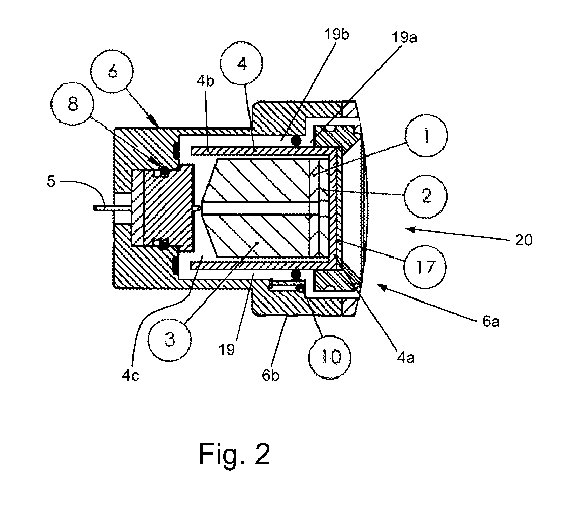

FIG. 2 shows another embodiment of the pressure-compensated transducer assembly of the present invention with the same functional elements identified. The illustrated transducer assembly comprises an inner housing 4 with a closed transducer end 4a and a sidewall 4b, and defining a first interior space 4c. Outer housing 6 has an open transducer end 6a and a sidewall 6b, and defines a second interior space. A functional element is provided in the first interior space. The illustrated functional element is a piezoelectric transducer having a first ceramic layer 1, a second ceramic layer 2, and a backing 3. The piezoelectric transducer is positioned in inner space 4c so that the face of the piezo disc is held in close contact with the inner surface of housing floor 4a. A PEEK face plate 17 is bonded to the outside face of inner housing floor 4a, and cooperates with the housing floor, and with first ceramic layer 1, second ceramic layer 2, and backing 3, to provide an acoustic sounder.

A channel 19 is provided in the space between the outer housing and the inner housing, with the channel having a transducer end 19a open to the environment 20 and having a connection end 19b open to first interior space 4c. In the preferred embodiment channel 19 opens to the environment at a location immediately adjacent to the transducer assembly where acoustic waves are emitted by the transducer. When the transducer assembly includes a face plate as illustrated, channel 19 opens to the environment at a location immediately adjacent to the face plate. Most preferably channel 19 is open in the direction that acoustic waves are emitted by the transducer.

Channel 19 is sized to allow fluid such as from drilling mud to flow from the environment adjacent the transducer into the transducer end 19a of channel 19. Thus, the pressure inside transducer end 19a of channel 19 is at or very close to the pressure on the outer surface of the transducer assembly where acoustic waves are emitted.

A blocking member 10 is provided in and movable within channel 19. The position of the blocking member defines a connection end channel portion 19b and a transducer end channel portion 19a. The blocking member is effective for preventing fluid from flowing from the connection end channel portion to the transducer channel portion.

A relatively non-compressible fluid is provided in the first interior space, and extends into the connection end channel portion to the blocking member.

Control electronics 5 enter the device through the connection end.

In operation, as the environmental pressure outside the assembly increases (such as when the assembly is lowered into an oil well), movable blocking member 10 moves in channel 19 in response to an increased environmental pressure. When the environmental pressure is increased, blocking member 10 moves away from the transducer end 19a of channel 19 and toward connection end 19b. This causes the connection end portion 19b of channel 19 to decrease in size/volume. As the volume of space 19b is reduced, the pressure that the liquid exerts on the inside of the device is increased until the pressure inside the device is in equilibrium with the pressure exerted on the transducer face.

While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected.

Additionally, it is to be appreciated that the elements described herein may be combined in combinations and sub-combinations other than those described as preferred embodiments. Moreover, the inventive devices may comprise any or all combinations of the disclosed elements, or the inventive devices may consist essentially of any or all combinations of the disclosed elements.

## Claims

1. A pressure-compensated transducer assembly with a transducer end portion and a connection end portion, the assembly comprising:
an inner housing having a closed transducer end and a sidewall defining a first interior space;
an outer housing with an open transducer end and a sidewall defining a second interior space;
a transducer in the transducer end portion of the first interior space;
an inter-housing space between the outer housing and the inner housing, with the inter-housing space having a transducer end portion open to the environment adjacent the transducer end of the inner housing, and having a connection end portion open to the first interior space;
a blocking member in said inter-housing space, said blocking member being effective to separate and define a transducer end portion of the inter-housing space from a connection end portion of the inter-housing space, and effective to prevent fluids from flowing from the connection end to the transducer end, and *vice versa;* and
an interior liquid in the first interior space and extending into the connection end portion of the inter-housing space;
wherein said blocking member is movable within said inter-housing space in response to pressure differences between the pressure exerted by the environment on the transducer end of the inter-housing space and the pressure exerted by the interior liquid on the connection end of the inter-housing space.

2. The assembly of claim 1 wherein said transducer comprises one or more piezoelectric ceramic elements and a backing disposed between the piezoceramic elements and the connection end of the housing so as to cause acoustic waves generated by the one or more piezoceramic elements to propagate out through the transducer end of the housing.

3. The assembly of claim 1 wherein said interior liquid is an oil.

4. The assembly of claim 1 and further including a face plate adjacent to and contacting the outside of the transducer end of said inner housing.

5. The assembly of claim 1 wherein the liquid-filled connection end portion of the inter-housing space is ineffective for acoustically decoupling the inner face of said piezoelectric transducer from the inside of the inner housing.

6. The assembly of claim 1 wherein said inner housing is substantially within and spaced apart from the outer housing so that the inter-housing space surrounds the inner housing.

7. The assembly of claim 1 wherein said inter-housing space comprises one or more channels between the inner housing and the outer housing, said channels being open at one end to the environment adjacent the transducer end of the inner housing, and open at the other end to the first interior space.

8. An acoustic transducer for use in high-temperature and high-pressure environments, comprising:
a) a housing having a transducer end face and defining a closed, oil-filled interior space;
b) a piezoelectric transducer assembly in said oil-filled interior space;
c) a channel connecting said oil-filled interior space to the exterior environment around the transducer, said channel having one end open to the exterior environment adjacent the transducer end face, and one end open to the interior space; and
d) a blocking element that is free to move within said channel but that is effective to prevent fluid from flowing through the channel from the interior space to the exterior environment, and *vice versa,* wherein as pressure builds in the external environment the blocking element moves in the channel until the pressure differential between the interior space and the external environment is at equilibrium.

9. The transducer of claim 8 wherein said blocking member is an O-ring.
